# EUROPÄISCHE PATENTSCHRIFT

(11) **EP 2 397 735 B1**
(45) Veröffentlichungstag und Bekanntmachung des Hinweises auf die Patenterteilung: **04.10.2017**
(21) Anmeldenummer: 11170617.2
(22) Anmeldetag: 20.06.2011
(51) Int. Cl.: F16K 31/06, A01K 63/04, A01K 63/00, H01F 7/10, H01F 7/18

(54) **Aquarium mit Magnetventil für CO2 Einleitung**
Aquarium with magnetic valve for CO2 insertion
Aquarium avec soupape magnétique d'admission de CO2

(30) Priorität: 21.06.2010 DE 202010005692 U
(43) Veröffentlichungstag der Anmeldung: 21.12.2011
(73) Patentinhaber: Bavaria Fluid Systems GmbH, 73765 Neuhausen / Fildern (DE)
(72) Erfinder: Zucht, Manfred, 8552 Eibiswald (AT)
(74) Vertreter: Lohr, Georg

(56) Entgegenhaltungen:
- WO-A1-2009/000271
- DE-B- 1 074 732
- US-A- 5 483 411
- DATABASE WPI Week 200780 Thomson Scientific, London, GB; AN 2007-866320 XP002716248, -& JP 2007 300865 A (ISHIKAWA H) 22. November 2007 (2007-11-22)

## Beschreibung

### Technisches Gebiet

Die Erfindung betrifft ein Aquarium nach dem Oberbegriff des Anspruchs 1, insbesondere ein Aquarium mit einem Magnetventil zur Steuerung des Einleitens von Gasen wie z.B. CO₂ (Kohlendioxid) oder Luft in das Aquarium, sowie das Magnetventil selbst.

### Stand der Technik

Aquarien sind mit Wasser zu füllende Behälter in denen Wasserlebewesen wie Fische, Wasserschnecken und Wasserpflanzen gehalten werden. Insbesondere wenn (auch) Pflanzen in dem Aquarium wachsen, muss CO₂ in dem Wasser gelöst werden, denn Pflanzen setzen CO₂ durch Photosynthese in O₂ (Sauerstoff) um. Um CO₂ zu lösen wird es in das Wasser eingeleitet. Dazu wird eine CO₂-Quelle, meist eine Druckflasche mit CO₂ über einen Druckminderer mit einer Leitung verbunden, die im Wasser endet. Oft mündet die Leitung in einem Schwamm, einer Wirbelkammer oder dgl. um das CO₂ in vielen kleinen Blasen einzuleiten, um es besser zu lösen. Bei Dunkelheit sollte die CO₂ Zufuhr unterbrochen werden, weil die Pflanzen ohne Licht kein CO₂ umsetzen können und das Wasser droht zu übersäuern. Eine solche Unterbrechung der CO₂ Zufuhr bezeichnet man auch als Nachtabschaltung. Dazu ordnet man zwischen der CO₂-Quelle und dem einleitenden Ende der Leitung ein Magnetventil an, das über einen Schalter, z.B. eine Zeitschaltuhr, einen Helligkeitssensor oder einen pH-Sensor gesteuert wird. Ist das Magnetventil geschlossen, strömt kein CO₂ in das Wasser; ist es offen wird CO₂ in das Wasser eingeleitet. Im einfachsten und damit kostengünstigsten Fall wird das Magnetventil durch den Schalter mit der ortsüblichen Netzspannung verbunden bzw. davon getrennt. Diese Netzspannung beträgt beispielsweise in Europa 230V Wechselspannung (50Hz) und in den USA 120V Wechselspannung (60Hz). JP 2007 300865 A offenbart ein Aquarium mit einem Magnetventil zur Steuerung einer CO₂-Zufuhr.

Magnetventile zur Steuerung der CO₂-Zufuhr haben in der Regel einen Ventilsitz, der durch einen sogenannten beweglichen Anker freigegeben bzw. verschlossen wird. Der bewegliche Anker ist in der Regel gegen den Ventilsitz vorgespannt, man spricht dann von stromlos geschlossenen Magnetventilen. Ein entsprechendes Magnetventil ist beispielsweise in der Offenlegungsschrift DE 10 2006 003 543 beschrieben. Ebenso sind auch stromlos offene Magnetventile bekannt, dann ist der Anker in Richtung der Offenstellung vorgespannt. Um den beweglichen Anker gegen die Rückstellkraft zu verschieben, wird eine Spule mit einer Stromquelle verbunden. Der Strom durch die Spule erzeugt einen magnetischen Fluss. Der magnetische Fluss wird z.B. durch ein Joch und/oder einen festen Anker derart geführt, dass auf den beweglichen Anker eine der Rückstellkraft entgegenwirkende Reluktanzkraft wirkt. Diese Reluktanzkraft ist eine Funktion des Stroms durch die Spule und damit der Spannung mit der die Spule gespeist wird. Bei der kostengünstigsten Versorgung der Spule mit der jeweils ortsüblichen Wechselspannung neigen Magnetventile deshalb zum Brummen. Ein solches Brummen wird insbesondere im Wohnbereich nicht akzeptiert. Um dieses Brummen zu reduzieren ordnet man auf dem beweglichen Anker sogenannte Phasenverschiebungsringe an. Das sind leitende Ringe, meist aus Kupfer, die das Brummen unterdrücken. Die Wirkung dieser Phasenverschiebungsringe hängt auch von der Leistungsaufnahme der Magnetventile ab. Bei den üblichen 0,8W bis 2,5W bei 230V, 50 Hz funktioniert diese Methode nicht zuverlässig, erst bei höheren Leistungen kann durch einen sogenannten Phasenverchiebungsring das Brummen zuverlässig verhindert werden. Deshalb muss jedes Magnetventil das mit einer geringen Leistungsaufnahme spezifiziert ist, auf sein Brummverhalten getestet werden.

### Darstellung der Erfindung

Der Erfindung liegt die Beobachtung zugrunde, dass das Brummen der Magnetventile zwar durch einen Brückengleichrichter behoben werden könnte, dass sich die Spule dann stärker erwärmt, was bei der Auslegung der Spule beachtet werden muss und diese verteuert. Zudem wird dadurch die Leistungsaufnahme des Magnetventils erhöht. Alternativ kann man gleichgerichtete Niederspannung verwenden, aber auch dies verteuert das Aquarium.

Der Erfindung liegt die Aufgabe zugrunde, das Brummen von Aquarien mit Magnetventilen zur Steuerung der CO₂-Zufuhr zu unterbinden.

Diese Aufgabe ist durch ein Aquarium, ein Magnetventil für das Aquarium sowie ein Verfahren nach den entsprechenden unabhängigen Ansprüchen 1, 3 und 5 gelöst. Vorteilhafte Ausgestaltungen sind Gegenstand der abhängigen Ansprüche.

Kern der Erfindung ist es, die Induktivität der Spule dazu zu nutzen, dass die Summe aus der auf den beweglichen Anker wirkenden Rückstellkraft und der dieser entgegenwirkenden Reluktanzkraft nicht null wird. Dadurch bleibt der bewegliche Anker bei angeschlossener Spule bevorzugt immer in einer Endstellung, er bewegt sich folglich nicht.

Das Aquarium nach der Erfindung hat Mittel zum Zuführen von CO₂. Diese Mittel haben mindestens ein Magnetventil, um die CO₂-Zuführung zu steuern. Das Magnetventil weist mindestens eine Spule auf, um durch Erzeugen einer Reluktanzkraft auf einen beweglichen Anker diesen gegen eine Rückstellkraft zu verschieben und dadurch das Magnetventil zu öffnen oder zu schließen. Entsprechend kann die Reluktanzkraft durch Anlegen einer Wechselspannung an die Spule "erzeugt" werden. Die Erfindung beruht auf der Erkenntnis, dass das oben beschriebene Brummen des Magnetventils entsteht, weil die Reluktanzkraft proportional zum Quadrat des Stroms durch die Spule ist. Somit alterniert bei einer wechselspannungsgespeisten Spule das Vorzeichen des Stroms und die Reluktanzkraft variiert periodisch zwischen 0 und einem maximalen Wert. Folglich alterniert das Vorzeichen der auf den beweglichen Anker wirkenden resultierenden Kraft, welche sich aus der Summe aus Rückstellkraft und Reluktanzkraft zusammensetzt. Dadurch schwingt der bewegliche Anker mit der doppelten Wechselspannungsfrequenz und erzeugt ein hörbares Brummen.

Nach der Erfindung tritt dieses Brummen nicht auf, weil parallel zu der Spule eine Freilaufdiode geschaltet ist und weil die Spule des Magnetventils über eine weitere in Reihe mit der Spule geschaltete erste Diode mit der Wechselspannung derart verbunden ist, dass die Durchlassrichtungen der beiden Dioden einander entgegengesetzt sind. Somit wird die Spule nur von einer Halbwelle der Wechselspannung gespeist, denn die folgende Halbwelle wird durch die weitere Diode gesperrt. Während keine externe Spannung an der Spule anliegt klingt der Spulenstrom durch die Freilaufdiode langsam ab, bis er mit der nächsten Halbwelle wieder ansteigt. Bei einer idealen Spule würde das Abklingverhalten nur durch die Induktivität der Spule und den konstanten Spannungsabfall an der Freilaufdiode bestimmt. Deshalb klingt auch das Magnetfeld, welches die Reluktanzkraft erzeugt, nur langsam ab, um mit der nächsten Halbwelle wieder anzusteigen. Die Summe aus Reluktanzkraft und Rückstellkraft hat deshalb bevorzugt keinen Vorzeichenwechsel und deshalb bleibt der bewegliche Anker in seiner Position, bevorzugt an einem Anschlag und erzeugt kein Brummen. Der Mittelwert des Betrags des durch die Spule fließenden Stroms ist wesentlich kleiner als bei der Lösung mit dem Brückengleichrichter und hat bevorzugt größenordnungsmäßig den gleichen oder einen kleineren Wert wie bei dem brummenden Magnetventil nach dem Stand der Technik, deshalb findet keine problematische Erwärmung der Spule statt. Somit können die in großen Stückzahlen gefertigten Magnetventile ohne Veränderung der Spulen, d.h. mit minimalen Kosten zu "nichtbrummenden" Magnetventilen "aufgerüstet" werden.

Der große Vorteil der Erfindung liegt darin, dass die zusätzlichen Kosten für die Beseitigung des Brummens sehr gering sind. Dies Kosten für die Diode und die Freilaufdiode können insbesondere dadurch kompensiert werden, dass auf den nach dem Stand der Technik notwendigen Phasenverschiebungsring nun verzichtet werden kann. Auch die ansonsten trotz Phasenverschiebungsring notwendigen "Brummtest" können nun entfallen, wodurch die Kosten für die Dioden überkompensiert werden.

Bevorzugt ist die Induktivität der Spule so zu bemessen, dass die Reluktanzkraft des Magnetfeldes bei anliegender Wechselspannung und maximal abgeklungenem Spulenstrom größer ist, als die der Reluktanzkraft entgegenwirkende Rückstellkraft auf den beweglichen Anker. Dadurch befindet sich der Anker bei angeschlossener Spule immer in seiner maximalen Auslenkung gegen die Rückstellkraft, d.h. er liegt z.B. an einem Anschlag an. Eine Schwingung des beweglichen Ankers, die ein Brummen hervorrufen könnte ist damit ausgeschlossen.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt ein Aquarium mit einer CO₂ Zuführung,
Figur 2 zeigt ein typisches Magnetventil mit einer Spule,
Figur 3 zeigt ein Schaltbild, und
Figur 4 zeigt den Verlauf des Spulenstroms mit der Zeit.

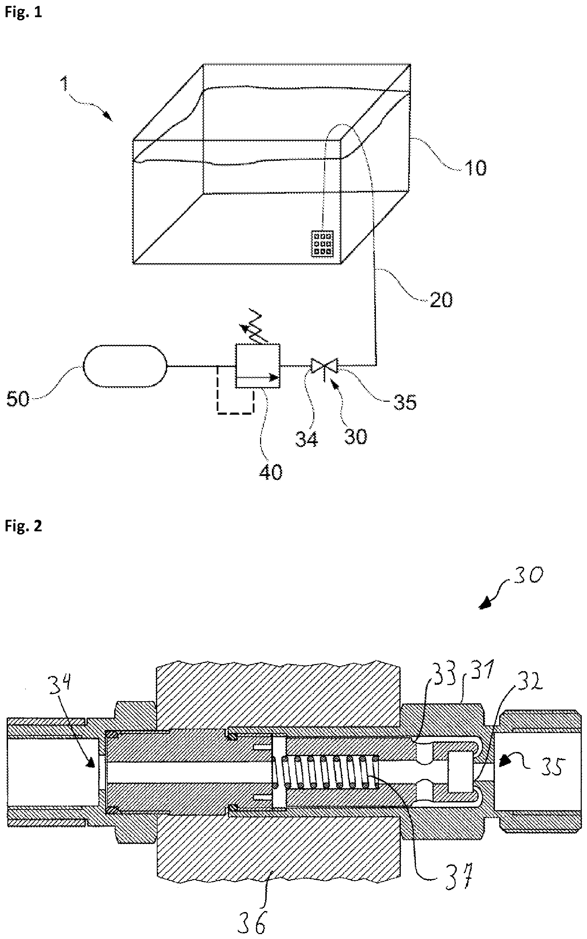

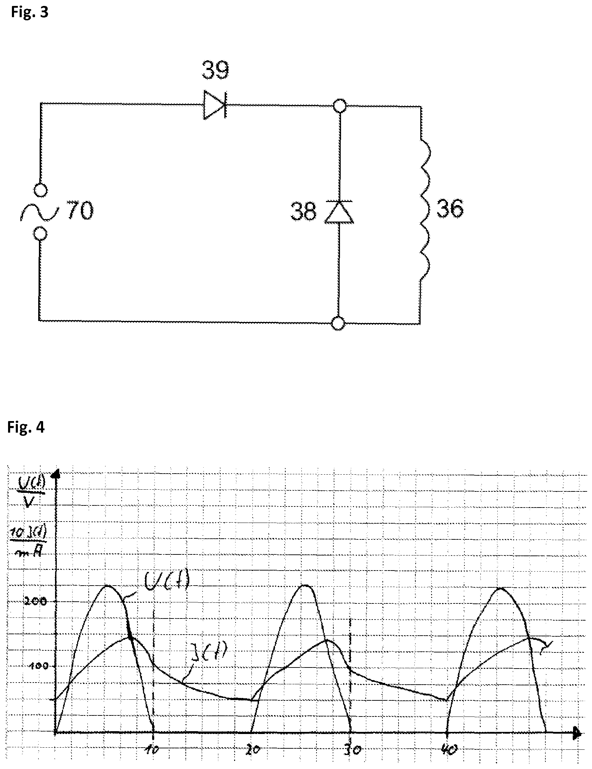

Das Aquarium 1 in Figur 1 hat wie üblich ein Becken 10 für Wasser. Zum Lösen von CO₂ im Wasser des Aquariums 1 hat das Aquarium 1 eine in dem Becken 10 mündenden Leitung 20, die über ein Magnetventil 30 und einen Druckminderer 40 mit einer CO₂-Flasche 50 verbunden ist. Das Magnetventil 30 ist über einen Schalter mit dem ortsüblichen Wechselspannungsnetz verbunden (nicht dargestellt, vgl. Fig. 3). Figur 2 zeigt ein erfindungsgemäßes Magnetventil 30. Es hat einen Ventilkörper 31 mit einem Ventilsitz 32, der durch Verschieben eines beweglichen Ankers 33 gegen eine Feder 37 geöffnet wird, so dass Zulauf 34 und Ablauf35 des Magnetventils miteinander kommunizieren, d.h. CO₂ oder grundsätzlich auch jedes andere Fluid kann dann vom Zulauf 34 zum Ablauf 35 strömen. Entsprechend kann das Magnetventil auch für andere Zwecke eingesetzt werden, insbesondere ist seine Verwendung nicht an ein Aquarium gebunden. Um den beweglichen Anker 33 gegen die als Rückstellkraft wirkende Kraft der Feder 37 zu verschieben und den Ventilsitz 32 freizugeben, wird eine Wechselspannung an eine Spule 36 angelegt. Die Spule 36 erzeugt ein Magnetfeld und ist derart angeordnet, dass der magnetische Widerstand durch eine Verschiebung des beweglichen Ankers 33 gegen die Feder 37 reduziert wird, d.h. beim Einschalten der Spule wird eine auf den beweglichen Anker 33 wirkende Reluktanzkraft erzeugt. Damit der bewegliche Anker 33 wegen der an der Spule anliegenden Wechselpannung nicht schwingt, ist eine Freilaufdiode 38 parallel zu der Spule 36 geschaltet und die Spule 36 ist weitere Diode 39 mit der Wechselspannungsquelle 70 verbunden. Die Durchlassrichtungen der Freilaufdiode 38 und der weiteren Diode 39 sind einander entgegen gerichtet. Durch diese Schaltung, die in Figur 3. schematisch vereinfacht dargestellt ist, ergibt sich der in Figur 4 gezeigt Strom I(t) (in mA, um Faktor 10 vergrößert) durch die Spule 36. Die zweite Kurve zeigt die an der Spule 36 anliegende Spannung U(t) (in V). Die Spannung U(t) entspricht der in Europa üblichen Netzspannung (230V, 50 Hz), wobei die zweite Halbwelle durch die Diode 39 blockiert wird; anstelle der zweiten Halbwelle ist die Spannung U(t) an der Spule gleich dem Spannungsabfall an der Freilaufdiode 38 und dem Ohmschen Widerstand der Spule, genauer des Freilaufpfads. Der Strom I(t) folgt gemäß U(t) = L *dl(t)/dt (t steht für die Zeit, L für die Induktivität der Spule) der Spannung U(t) und steigt deshalb zunächst ebenfalls an und erreicht sein Maximum wenige ms nach dem Spannungsmaximum. Sobald die Spannung U(t) auf Null gefallen ist, blockiert die Diode 39 die zweite Halbwelle der Wechselspannung, d.h. die Spannung an der Spule entspricht dem konstanten Spannungsabfall an der Freilaufdiode 38 zuzüglich des Spannungsabfalls durch Ohmsche Verluste. Der Strom fällt nun langsam (im Vergleich zum Stand der Technik) gemäß U(t) = L*dl(t)/dt ab. Langsam deshalb, weil der Spannungsabfall an der Freilaufdiode 38 betragsmäßig etwa 1/230 des Maximums der Spannung der zweiten Halbwelle beträgt und auch der Spannungsabfall durch den Ohmschen Widerstand betragsmäßig deutlich geringer ist, als die Spannung der zweiten Halbwelle. Wegen der Induktivität L der Spule sinkt der Strom I(t) deshalb bis zur nächsten Halbwelle nicht bis auf Null. Entsprechend ist auch die zum Quadrat des Stromes I(t)² proportionale Reluktanzkraft immer größer Null, wodurch eine Schwingung des beweglichen Ankers reduziert oder bevorzugt unterbunden wird.

Natürlich ist diese Offenbarung nicht auf das Einleiten von CO₂ in ein Aquarium beschränkt, vielmehr kann der Fluß beliebiger Fluide durch ein wechselspannungsgespeistes Magnetventil wie 30 gesteuert werden, wobei parallel zu der Spule 36 des Magnetventils eine Freilaufdiode 38 geschaltet ist und wobei die Spule 36 des Magnetventils 30 über eine weitere Diode 39 mit der Wechselspannungsquelle 70 derart verbunden ist, dass ihre Durchlassrichtung zur Durchlassrichtung der Freilaufdiode (38) entgegengesetzt ist (vgl. Fig. 3).

### Bezugszeichenliste

- 1: Aquarium
- 10: Becken
- 20: Leitung
- 30: Magnetventil
- 31: Ventilkörper
- 32: Ventilsitz
- 33: beweglicher Anker
- 34: Zulauf
- 35: Ablauf
- 36: Spule
- 37: Feder
- 38: Freilaufdiode
- 39: Diode (sperrt eine Halbwelle)
- 40: Druckminderer
- 50: CO₂-reservoir, z.B. CO₂ Flasche
- 70: Wechselspannungsquelle
- U(t): Spannung an der Spule 36
- I(t): Strom durch die Spule 36

## Patentansprüche

1. Aquarium (1) mit mindestens einem Magnetventil (30) zum Steuern einer CO₂-Zufuhr, wobei
- das Magnetventil (30) mindestens eine Spule (36), einen beweglichen Anker (33) und einen Ventilsitz (32) aufweist, um durch Erzeugen einer Reluktanzkraft auf den beweglichen Anker (33) diesen gegen eine Rückstellkraft zu verschieben und durch den beweglichen Anker (33) das den Ventilsitz (32) zu öffnen oder zu schließen,
- das Aquarium (1) eine Freilaufdiode hat, die parallel zu der Spule (36) geschaltet ist und
- das Aquarium (1) eine weitere Diode hat und die Spule (36) über die weitere Diode (39) mit einer Wechselspannungsquelle (70), derart verbunden ist, dass die Freilaufdiode (38) und die weitere Diode (39) einander entgegen gerichtete Durchlassrichtungen haben.

2. Aquarium (1) nach Anspruch 1,
**dadurch gekennzeichnet, dass**
die Wechselspannungsquelle (70) ein ortsübliches Wechselspannungsnetz ist und die Spule (36) eine derart bemessene Induktivität hat, dass die Reluktanzkraft des Magnetfeldes auf den beweglichen Anker (33) bei an der Spule (36) anliegender Wechselspannung und maximal abgeklungenem Spulenstrom I(t) größer ist, als eine der Reluktanzkraft entgegenwirkende Rückstellkraft auf den beweglichen Anker (33).

3. Magnetventil (30) zum Steuern einer CO₂-Zufuhr zu einem Aquarium, mit mindestens einer durch ein ortsübliches Wechselspannungsnetz gespeisten Spule (36), einem Ventilsitz (32) und einem beweglichen Anker (33), wobei Spule (36), beweglicher Anker(33) und Ventilsitz (32) derart angeordnet sind, dass ein durch einen Strom I(t) durch die Spule (36) erzeugtes Magnetfeld eine Reluktanzkraft auf den beweglichen Anker (33) ausübt, welche den Anker (33) gegen eine Rückstellkraft verschiebt, wodurch der Ventilsitz (32) durch den Anker (33) verschlossen oder freigegeben wird, wobei das Magnetventil eine Freilaufdiode (38) hat, die parallel zu der Spule (36) geschaltet ist und eine weitere Diode (39) hat, die in Reihe zu der Spule (36) geschaltet ist, wobei die Freilaufdiode (38) und die weitere Diode (39) einander entgegen gerichtete Duchlassrichtungen haben.

4. Magnetventil (30) nach Anspruch 3,
**dadurch gekennzeichnet, dass**
die Spule (36) eine derart bemessene Induktivität hat, dass die Reluktanzkraft des Magnetfeldes auf den beweglichen Anker (33) bei der an der Spule (36) anliegenden Wechselspannung und maximal abgeklungenem Spulenstrom I(t) größer ist, als eine der Reluktanzkraft entgegenwirkende Rückstellkraft auf den beweglichen Anker (33).

5. Verfahren zum Steuern der Zufuhr von CO₂ zu einem Aquarium (1), durch Verbinden einer Wechselspannungsquelle (70) mit einer Spule (36) eines Magnetventils (30) nach einem der Ansprüche 3 bis 4, **dadurch gekennzeichnet, dass**
die Spule (36) über mindestens eine in Reihe zu der Spule (36) geschaltete Diode (39) mit der Wechselspannungsquelle (70) verbunden wird und dass einer Freilaufdiode parallel zu der Spule (36) angeordnet wird, wobei die Diode (39) und die Freilaufdiode (38) einander entgegengesetzte Durchlassrichtungen haben, wodurch nur eine Halbwelle der Wechselspannung die Spule (36) treibt und der Spulenstrom I(t) anschließend über die Freilaufdiode (38) abklingt.

6. Verfahren nach Anspruch 5, **dadurch gekennzeichnet, dass**
die Induktivität der Spule (36) derart bestimmt wird, dass die Reluktanzkraft des Magnetfeldes auf den beweglichen Anker (33) bei an der Spule (36) anliegender Wechselspannung und maximal abgeklungenem Spulenstrom I(t) größer ist, als eine der Reluktanzkraft entgegenwirkende Rückstellkraft auf den beweglichen Anker (33).

## Claims

1. Aquarium (1) with at least one solenoid valve (30) for controlling a CO₂ supply,
wherein
- the solenoid valve (30) has at least one coil (36), a movable armature (33), and a valve seat (32), in order to displace the movable armature (33) against a restoring force by generating a reluctance force on said movable armature (33), and to open or close the valve seat (32) by means of the movable armature (33),
- the aquarium (1) has a free-wheeling diode being connected in parallel to the coil (36) and
- the aquarium (1) has a further diode and the coil (36) is connected to an AC voltage source (70) via the further diode (39) such that the free-wheeling diode (38) and the further diode (39) have passage directions being opposed to each other.

2. Aquarium (1) according to claim 1,
**characterized in that**
the voltage source (70) is a local AC voltage network and the coil (36) has an inductance being dimensioned such that the reluctance force of the magnetic field on the movable armature (33), with AC voltage applied to the coil (36) and maximally decayed coil current I(t), is greater than a restoring force on the movable armature (33) acting against the reluctance force.

3. Solenoid valve (30) for controlling a CO₂ supply to an aquarium, comprising at least one coil (36) being powered by local AC voltage network, a valve seat (32) and a movable armature (33), wherein the coil (36), the movable armature (33) and the valve seat (32) are arranged such that a magnetic field generated by a current I(t) through the coil (36) exerts a reluctance force on the movable armature (33) which displaces the armature (33) against a restoring force, whereby the valve seat (32) is closed or released by means of the armature (33),
wherein the solenoid valve has a free-wheeling diode (38) connected in parallel to the coil (36) and has a further diode (39) connected in series with the coil (36),
wherein the free-wheeling diode (38) and the further diode (39) have mutually opposing passage directions.

4. Solenoid valve (30) according to claim 3,
**characterized in that**
the coil (36) has an inductance being dimensioned such that the reluctance force of the magnetic field on the movable armature (33), with AC voltage applied to the coil (36) and maximally decayed coil current I(t), is greater than a restoring force on the movable armature (33) acting against the reluctance force.

5. Method for controlling the CO₂ supply to an aquarium (1), by connecting an AC voltage source (70) to a coil (36) of a solenoid valve (30) according to one of claims 3 to 4,
**characterized in that**
the coil (36) is connected to the AC voltage source (70) via at least one diode (39) being connecting in series to the coil (36), and the free-wheeling diode is arranged in parallel to the coil (36), wherein the diode (39) and the free-wheeling diode (38) have mutually opposite passage directions, whereby only a half-wave of the AC voltage drives the coil (36) and the coil current I(t) subsequently decays via the free-wheeling diode (38).

6. Method according to claim 5,
**characterized in that**
the inductance of the coil (36) is determined such that the reluctance force of the magnetic field on the movable armature (33), with AC voltage applied to the coil (36) and maximally decayed coil current I(t), is greater than a restoring force on the movable armature (33) acting against the reluctance force.

## Revendications

1. Aquarium (1) avec au moins une électrovanne (30) pour réguler un apport de CO₂, dans lequel
- l'électrovanne (30) présente au moins un enroulement (36), un induit mobile (33) et un siège de soupape (32) afin de déplacer l'induit mobile (33) contre une force de rappel en générant une force de réluctance exercée sur celui-ci et d'ouvrir ou de fermer le siège de soupape (32) à l'aide de l'induit mobile (33),
- l'aquarium (1) possède une diode de marche à vide montée parallèlement à l'enroulement (36) et
- l'aquarium (1) possède une autre diode et l'enroulement (36) est connecté par l'intermédiaire de l'autre diode (39) à une source de courant alternatif (70) de telle manière que la diode de marche à vide (38) et l'autre diode (39) aient des sens de passage opposés l'une à l'autre.

2. Aquarium (1) selon la revendication 1, **caractérisé en ce que** la source de courant alternatif (70) est un réseau de courant alternatif local ordinaire et l'enroulement (36) a une inductance dimensionnée de telle façon que la force de réluctance du champ magnétique agissant sur l'induit mobile (33) est plus grande, quand le courant alternatif est appliqué à l'enroulement (36) et que le courant dans l'enroulement l(t) a diminué au maximum, qu'une force de rappel opposée à la force de réluctance agissant sur l'induit mobile (33).

3. Électrovanne (30) pour réguler un apport de CO₂ à un aquarium, avec au moins un enroulement (36) alimenté par un réseau de courant alternatif local ordinaire, un siège de soupape (32) et un induit mobile (33), dans laquelle l'enroulement (36), l'induit mobile (33) et le siège de soupape (32) sont disposés de telle façon qu'un champ magnétique généré par un courant I(t) passant par l'enroulement (36) exerce une force de réluctance sur l'induit mobile (33) qui déplace l'induit (33) contre une force de rappel, de sorte que le siège de soupape (32) est fermé ou dégagé par l'induit (33),
laquelle électrovanne possède une diode de marche à vide (38) montée en parallèle avec l'enroulement (36) et une autre diode (39) montée en série avec l'enroulement (36), la diode de marche à vide (38) et l'autre diode (39) ayant des sens de passage opposés l'une à l'autre.

4. Électrovanne (30) selon la revendication 3, **caractérisée en ce que** l'enroulement (36) a une inductance dimensionnée de telle façon que la force de réluctance du champ magnétique agissant sur l'induit mobile (33) est plus grande quand le courant alternatif est appliqué à l'enroulement (36) et que le courant dans l'enroulement l(t) a diminué au maximum que lorsqu'une force de rappel opposée à la force de réluctance s'exerce sur l'induit mobile (33).

5. Procédé pour réguler l'alimentation en CO₂ d'un aquarium (1) par le raccordement d'une source de courant alternatif (70) à un enroulement (36) d'une électrovanne (30) selon l'une des revendications 3 à 4, **caractérisé en ce que** l'enroulement (36) est relié à la source de courant alternatif (70) par au moins une diode (39) montée en série avec l'enroulement (36) et **en ce qu'**une diode de marche à vide est montée en parallèle avec l'enroulement (36), la diode (39) et la diode de marche à vide (38) ayant des sens de passage opposés l'une à l'autre de sorte qu'une demi-onde seulement du courant alternatif excite l'enroulement (36) et le courant dans l'enroulement l(t) diminue ensuite à l'aide de la diode de marche à vide (38).

6. Procédé selon la revendication 5, **caractérisé en ce que** l'inductance de l'enroulement (36) et déterminée de telle façon que la force de réluctance du champ magnétique agissant sur l'induit mobile (33) est plus grande quand le courant alternatif est appliqué à l'enroulement (36) et que le courant dans l'enroulement I(t) a diminué au maximum que lorsqu'une force de rappel opposée à la force de réluctance s'exerce sur l'induit mobile (33).
